**Europäisches Patentamt**

**European Patent Office**

**Office européen des brevets**

(19)

(11) Veröffentlichungsnummer : **0 154 665 B1**

(12) # EUROPÄISCHE PATENTSCHRIFT

(45) Veröffentlichungstag der Patentschrift :
**15.03.89**

(51) Int. Cl.⁴ : **A 01 C   7/20**

(21) Anmeldenummer : **84103584.3**

(22) Anmeldetag : **31.03.84**

(54) **Sämaschine.**

(30) Priorität : **08.03.84 EP 84102467**

(43) Veröffentlichungstag der Anmeldung :
**18.09.85 Patentblatt 85/38**

(45) Bekanntmachung des Hinweises auf die Patenterteilung : **15.03.89 Patentblatt 89/11**

(84) Benannte Vertragsstaaten :
**AT BE CH DE FR GB IT LI LU NL SE**

(56) Entgegenhaltungen :
**EP-A- 0 085 621**
**AU-B-   434 865**
**DE-A- 3 117 536**
**US-A- 4 131 221**

(73) Patentinhaber : **Kirchberger, Franz**
**Lichtenfelser Strasse 43**
**D-8623 Staffelstein (DE)**

(72) Erfinder : **Kirchberger, Franz**
**Lichtenfelser Strasse 43**
**D-8623 Staffelstein (DE)**

(74) Vertreter : **LOUIS, PÖHLAU, LOHRENTZ & SEGETH**
**Kesslerplatz 1 Postfach 3055**
**D-8500 Nürnberg (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Sämaschine mit einer Vielzahl von an den Enden von Hebelarmen befestigten Säscharen, wobei jeder Hebelarm über je eine Torsionsfeder an einer gemeinsamen Trägerwelle in vertikaler Richtung verschwenkbar gelagert ist.

Eine Sämaschine dieser Art ist aus der DE-C-31 17 536 bekannt. Bei der bekannten Sämaschine sind hülsenförmige Torsionsfederelemente aus elastomerem Material vorgesehen, mittels welcher die Hebelarme auf der Trägerwelle torsionsgefedert angeordnet sind, die zugleich die Welle zur Einstellung der Vorspannkraft ist, mit der die Säschare in den Boden gedrückt werden. Anstelle elastomerer Torsionsfederelemente ist es aber prinzipiell auch möglich, metallische Torsionsfedern zu verwenden. Aufgrund der Tatsache, daß über die Trägerwelle die Vorspannkraft eingestellt werden kann, mit der die Säschare in den Boden gedrückt werden, und aufgrund der torsionsgefederten Anordnung der Hebelarme ohne besondere Lager auf dieser einzigen Welle wird eine enorme bauliche Vereinfachung gegenüber den herkömmlichen Sämaschinen erreicht, bei denen den Hebelarmen eigene Drehgelenke zugeordnet sind sowie von den Drehgelenken getrennte Federelemente vorgesehen sind. Auch sind Torsionsfederelemente aus Gummi oder dergleichem elastomerem Material einfache, platzsparende Bauteile, welche lange Standzeiten aufweisen.

Allerdings hat es sich gezeigt, daß das einheitliche ungegliederte Federmaterial der Torsionsfedern den verschiedenartigen Anforderungen an eine Säscharaufhängung nicht voll gerecht wird. Einerseits muß genügend Torsionsfederweg zur Verfügung stehen, damit über diese Federwegstrecke das Belastungsdrehmoment für das Eindringen des Schars in den Ackerboden aufgebaut werden kann. Dabei muß die Federstrecke so lang sein, daß Winkelbewegungen des Schars beim Durchfahren von Bodenwellen das aufgebaute Belastungsmoment nur unwesentlich ändern. Andererseits aber muß die Aufhängung des Hebelarms genügend Steifigkeit besitzen, um seitliche Bewegungen des Schars aus der Federdrehebene heraus zu begrenzen, da sich sonst die Säreihenabstände zwischen den Scharen ungleichmäßig verändern würden. Diese dafür nötige Festigkeit der Torsionsfedern beeinträchtigt wiederum die für eine Vertikalbewegung der Säschare geforderte Drehelastizität, so daß ein Kompromiß nur schwer zu finden ist.

Aus AU-B-434 865 ist eine Sämaschine der eingangs genannten Art bekannt, bei der jedoch die Hebelarme nicht über Torsionsfedern an einer gemeinsamen Trägerwelle gelagert sind. Andererseits aber sind bei dieser Druckschrift Stützelemente für eine seitliche Abstützung der Hebelarme vorgesehen, so daß das Schar in begrenztem Umfang seitlich Hindernissen auf dem Boden ausweichen kann.

Der Erfindung liegt nun die Aufgabe zugrunde, eine Sämaschine der eingangs genannten Art derart auszubilden, daß ohne zusätzliche Lagerung der Hebelarme sowohl die gewünschte Drehelastizität der Torsionsfedern sichergestellt als auch für eine hinreichende Konstanz des gegenseitigen Säreihenabstandes gesorgt werden kann.

Diese Aufgabe wird erfindungsgemäß dadurch gelöst, daß für eine seitliche Abstützung der Hebelarme Stützelemente vorgesehen sind, die zwischen den Hebelarmen für eine gegenseitige Abstützung der Hebelarme angeordnet sind.

Aufgrund der gegenseitigen Abstützung der Hebelarme in seitlicher Richtung tragen die benachbarten Hebelarmaufhängungen mit dazu bei, seitliche Auslenkungen eines einzelnen Hebelarmes, die wegen der mangelnden Steifigkeit der einzelnen Torsionsfedern in seitlicher Richtung auftreten würden, abzufangen. Aber abgesehen davon, daß die seitliche Auslenkung eines einzelnen Hebelarmes aufgrund der Weitergabe der Auslenkkraft auf die benachbarten Hebelarme kleiner wird, ändert sich auch der gegenseitige Abstand der Säschare bei einer in seitlicher Richtung erfolgenden Einwirkung auf ein einzelnes Säschar deshalb viel weniger, weil aufgrund der gegenseitigen Abstützung der Hebelarme nicht nur der betroffene Hebelarm sondern auch die benachbarten Hebelarme im gleichen Sinne ausgelenkt werden.

Vorzugsweise sind die Stützelemente elastisch, wobei deren Elastizität die Elastizität der Torsionsfedern in Drehrichtung deutlich unterschreitet.

Ferner können die Stützelemente Gleitflächen aufweisen, um die Reibung zwischen ihnen und den Torsionsfedern zu verringern, oder es können separate Reibringe vorgesehen sein, die zwischen den Torsionsfedern und den Stützelementen angeordnet sind.

Bei den elastischen Stützelementen kann es sich um metallische oder elastomerische handeln, die zum Aufbau einer gemeinsamen Zugfederkette zugverspannt oder zum Aufbau einer gemeinsamen Druckfederkette druckverspannt sein können. Ein derartiges Federsystem macht das Einzelschar elastisch gegenüber seitlichen Auslenkungen und schafft wie jede Federung von Arbeitswerkzeugen im Boden zusätzliche Unruhe, wodurch der Abfluß von Bodenmaterial besonders bei Bodenrückständen wie Stroh und Kluten trotz des erforderlichen Maßes an Abstandstreue der Säschare erleichtert wird. Bei einem derartigen einheitlichen Abstandsfedersystem wird eine Seite vom ausgelenkten Schar selbst weggeschoben, während die andere entweder durch die gegenseitige Zugverspannung der gemeinsamen Zugfederkette herangezogen oder bei einer Druckfederkette nachgeschoben wird.

Sind die Stützelemente zur Bildung einer Federkette elastisch, so stützt sich diese Federkette im allgemeinen auf jeder Seite an einem in Bezug auf die Trägerwelle in axialer Richtung feststehenden Anschlag ab. Bei unelastischen Stützelementen ist es zweckmäßig, die Enden der Stützelementkette abzufedern.

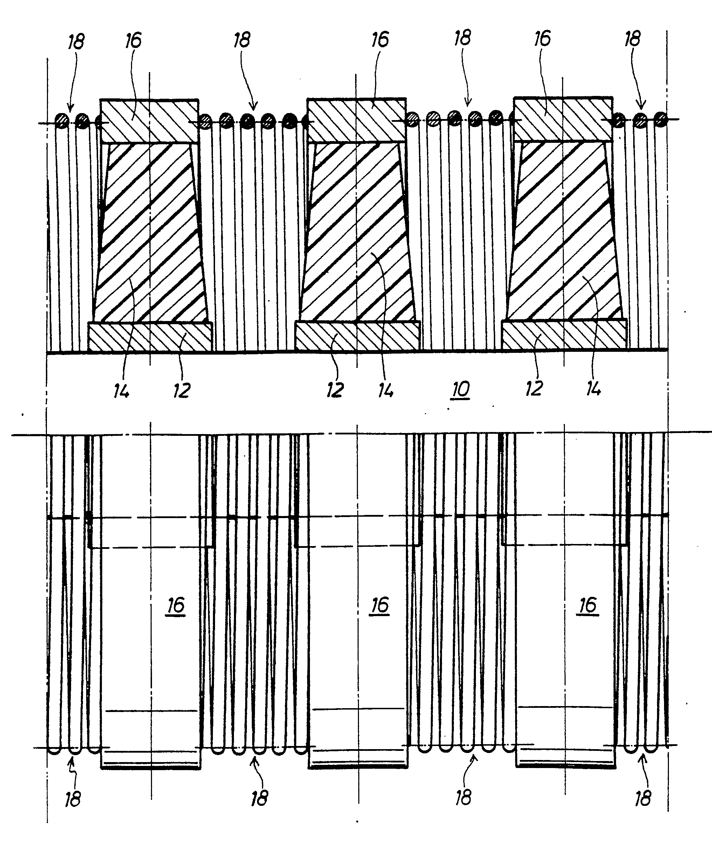

Weitere Vorteile, Einzelheiten und Merkmale der Erfindung ergeben sich aus der nachstehenden, anhand der beiliegenden Zeichnung erfolgenden Beschreibung eines bevorzugten Ausführungsbeispiels.

In der Zeichnung ist ein Ausschnitt aus einer Säscharaufhängung im Querschnitt gezeigt. Dort ist mit 10 eine Trägerwelle bezeichnet, die beispielsweise eine Sechskantwelle ist. Auf dieser Sechskantwelle sind Metallhülsen 12 mit einem Innensechskant aufgeschoben, deren Außenfläche fest mit einem elastomeren Torsionsfederelement 14 verbunden ist. Das ringförmige Torsionsfederelement 14 mit dem dargestellten Querschnitt ist auf seiner Außenfläche fest jeweils mit einem Hebelarm 16 verbunden, der das Torsionsfederelement 14 ringförmig umgreift und an dem entgegengesetzten Ende das Säschar trägt. Die Hebelarme 16 seind wie gezeigt in seitlicher Richtung gegenseitig über Stützelemente in Form von Schraubenfedern 18 abgestützt.

Wie man sieht, sind die Stützelemente und die ringförmigen Torsionsfederelemente koaxial zueinander auf der Trägerwelle 10 angeordnet.

## Patentansprüche

1. Sämaschine mit einer Vielzahl von an den Enden von Hebelarmen befestigten Säscharen, wobei jeder Hebelarm (16) über je eine Torsionsfeder (14) an einer gemeinsamen Trägerwelle (10) in vertikaler Richtung verschwenkbar gelagert ist, dadurch gekennzeichnet, daß für eine seitliche Abstützung der Hebelarme (16) Stützelemente (10) vorgesehen sind, die zwischen den Hebelarmen (16) für eine gegenseitige Abstützung der Hebelarme angeordnet sind.

2. Sämaschine nach Anspruch 1, dadurch gekennzeichnet, daß die Stützelemente (18) elastisch sind.

3. Sämaschine nach Anspruch 2, dadurch gekennzeichnet, daß die Stützelemente Schraubenfedern sind.

## Claims

1. A sowing machine with a multiplicity of coulters fixed at the ends of levet arms, each lever arm (16) being mounted via a respective torsion spring (14) on a common carrier shaft (10) for swivelling in the vertical direction, characterised in that provision is made for supporting elements (18) for the lateral support of the lever arms (16), which supporting elements are arranged between the lever arms (16) for the mutual support of the lever arms.

2. A sowing machine according to claim 1, characterised in that the supporting elements (18) are elastic.

3. A sowing machine according to claim 2, characterised in that the supporting elements are helical springs.

## Revendications

1. Semoir avec un certain nombre de socs fixés aux extrémités de bras de levier, chaque bras de levier (18) étant logé pivotant, au moyen d'un ressort de torsion (14) sur un arbre commun de support (10) en direction verticale, caractérisé en ce que pour un appui latéral des bras de levier (16) sont prévus des éléments d'appui (18), qui sont disposés entre les bras de levier (16) pour un appui mutuel des bras de levier.

2. Semoir selon la revendication 1, caractérisé en ce que les éléments d'appui (18) sont élastiques.

3. Semoir selon la revendication 2, caractérisé en ce que les éléments d'appui sont des ressorts à boudin.